# EUROPÄISCHE PATENTANMELDUNG

(11) **EP 4 578 680 A1**
(43) Veröffentlichungstag der Anmeldung: **02.07.2025**
(21) Anmeldenummer: 24774549.0
(22) Anmeldetag: 20.02.2024
(51) Int. Cl.: B60K 1/00, B60G 9/04, F16F 1/36, F16F 15/08

(54) **ELEKTRISCHE ACHSVORRICHTUNG FÜR EIN FAHRZEUG**

(30) Priorität: 22.03.2023 JP 2023045298
(71) Anmelder: IJTT Co., Ltd., Yokohama-shi Kanagawa 221-0056 (JP)
(72) Erfinder: HAMANAKA Yoshihisa, Ebina-shi, Kanagawa 243-0434 (JP); KATO So, Ebina-shi, Kanagawa 243-0434 (JP); ISHIKAWA Tomohiro, Ebina-shi, Kanagawa 243-0434 (JP); OGAWA Koji, Ebina-shi, Kanagawa 243-0434 (JP)
(74) Vertreter: Schaumburg und Partner Patentanwälte mbB
(86) Internationale Anmeldenummer: PCT/JP2024/006047
(87) Internationale Veröffentlichungsnummer: WO 2024/195404

(57) **Abstract**

Improves ease of assembly and reliability. The electric axle device 100 for a vehicle comprises an axle housing 1 for containing a differential device, a reduction gear 2 attached to the axle housing, an electric motor 3 attached to the reduction gear, and an inverter 4 attached to at least one of the reduction gear and the electric motor.

## Beschreibung

### BACKGROUND

### Technical Field

This disclosure relates to an electric axle device for a vehicle.

### Background Art

In a rigid axle suspension system used in vehicles such as trucks, an axle housing containing a differential device is connected to the vehicle body via springs such as leaf springs. In recent years, there have been examples of the axle housing being integrally attached with a reduction gear and an electric motor to form an electric axle device for a vehicle. By using this electric axle device for the vehicle, it is relatively easy to electrify an existing vehicle.

### [Prior art documents]

### [Patent documents]

[Patent document 1] JP 2017-150658 A
[Patent document 2] JP 2021-24327 A

### SUMMARY

### Technical Problem

By the way, an inverter for controlling the rotation of the electric motor is electrically connected to the electric motor. The inverter is attached to the vehicle body side, and the electric motor and the inverter are connected by a cable.

However, when the distance from the electric motor to the inverter is long, a relatively long cable must be laid along a specified route, which is difficult in terms of assembly.

In addition, when the vehicle is traveling, the axle housing rises and falls, and the electric motor rises and falls accordingly. Meanwhile, the inverter is fixed to the vehicle body side. Therefore, the cable must repeatedly deform in response to the rise and fall of the electric motor relative to the inverter, and there is a risk of the cable being damaged or broken. In addition, unnecessary loads are applied to the connectors that connect the cables to the inverter and the electric motor, which may damage the connector connection. All of these lead to reduced reliability.

The present disclosure has been devised in light of the above circumstances, and its purpose is to provide an electric axle device for a vehicle that can be easily assembled and is reliable.

### Solution to Problem

According to one aspect of the present disclosure, there is provided an electric axle device for a vehicle, comprising:
an axle housing for containing a differential device;
a reduction gear attached to the axle housing;
an electric motor attached to the reduction gear; and
an inverter attached to at least one of the reduction gear and the electric motor.

Preferably, the inverter is attached on the housing of at least one of the reduction gear and the electric motor.

Preferably, a boss that stands upward is provided on the housing of at least one of the reduction gear and the electric motor, and the inverter is attached to the boss.

Preferably, a flange that protrudes to a side is provided on a bottom surface portion of the inverter, and the flange is attached to the boss.

Preferably, the flange and the boss are attached via an elastic body.

Preferably, the inverter is attached inside of the housing of at least one of the reduction gear and the electric motor, and a housing of the inverter is shared with the housing of at least one of the reduction gear and the electric motor.

According to the present disclosure, it is possible to improve ease of assembly and reliability.

### BRIEF DESCRIPTION OF THE DRAWINGS

Fig. 1 is a schematic perspective view of an electric axle device according to a basic embodiment of the present disclosure;
Fig. 2 is a skeleton diagram showing a power transmission system of the electric axle device;
Fig. 3 is an exploded perspective view showing the configuration of the inverter mounting portion;
Fig. 4 is a plan view of the electric axle device before the inverter is mounted;
Fig. 5 is a plan view of the electric axle device after the inverter is mounted;
Fig. 6 is a schematic perspective view of a first modified example of the electric axle device;
Fig. 7 is a plan view of a first modified example of the electric axle device;
Fig. 8 is a plan view of a second modified example of the electric axle device;
Fig. 9 is a vertical cross-sectional view showing the configuration of the inverter mounting portion in a third modified example; and
Fig. 10 is a vertical cross-sectional view showing the configuration of the inverter mounting portion in a modified example of the third modified example.

### DESCRIPTION OF THE EXAMPLE EMBODIMENTS

Embodiments of the present disclosure will be described below with reference to the attached drawings. Please note that the present disclosure is not limited to the following embodiments.

### [Basic embodiment]

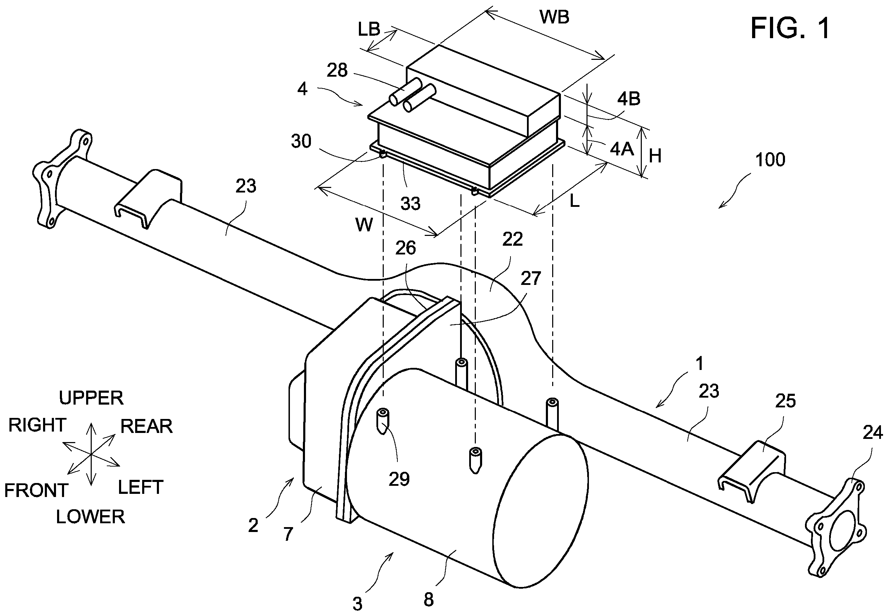

Fig. 1 is a schematic perspective view showing an electric axle device according to a basic embodiment of the present disclosure. The electric axle device 100 is configured to be applied to a vehicle, and in this embodiment, a truck. However, the type of vehicle is arbitrary. The electric axle device 100 is configured to drive the left and right rear wheels (not shown), and forms a part of a rigid axle (or axle-mounted) suspension system for the rear wheels.

For convenience, front, rear, left, right, upper and lower directions are defined as shown in the Figures. These directions roughly correspond to the directions of the vehicle.

The electric axle device 100 comprises an axle housing 1 for containing a differential device, a reduction gear 2 attached to the axle housing 1, an electric motor 3 attached to the reduction gear 2, and an inverter 4 attached to at least one of the reduction gear 2 and the electric motor 3. The electric axle device 100 of this embodiment does not include a differential device, but may include it.

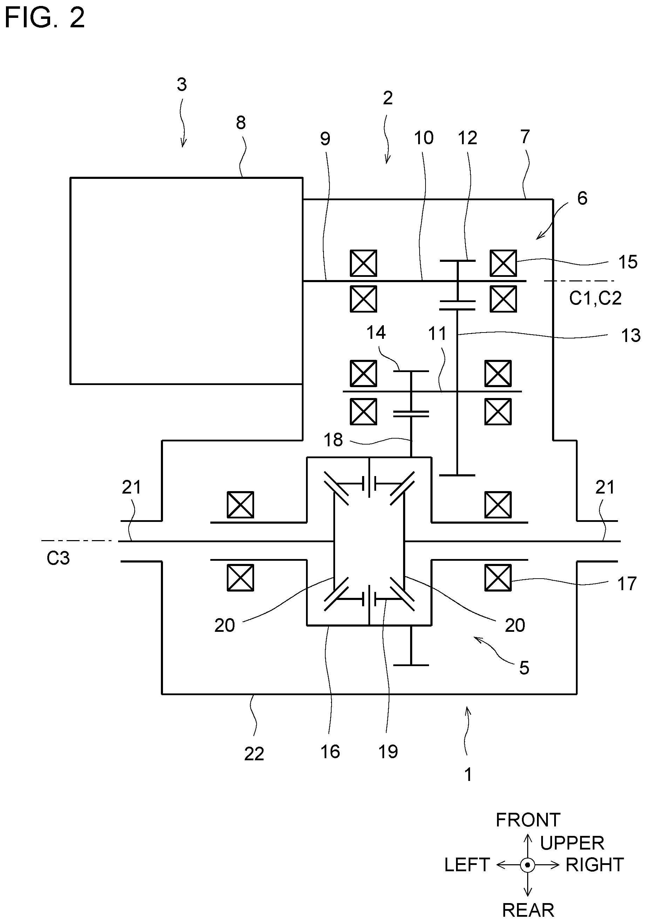

Fig. 2 is a skeleton diagram showing the power transmission system of the electric axle device 100 including a differential device 5. The reduction gear 2 includes a gear mechanism 6, and a housing containing the gear mechanism 6, i.e., a reduction gear housing 7. The electric motor 3 includes electric components such as a stator and a rotor (not shown), and a housing containing the electric components, i.e., an electric motor housing 8. The reduction gear housing 7 is detachably attached to the axle housing 1 with bolts or the like. The electric motor housing 8 is detachably attached to the reduction gear housing 7 with bolts or the like.

The gear mechanism 6 includes a drive shaft 10 coaxially connected to an output shaft 9 of the electric motor 3, a reduction shaft 11 provided parallel to the drive shaft 10, a drive gear 12 and a reduction gear 13 attached to the drive shaft 10 and the reduction shaft 11 respectively and meshed with each other, a drive gear 14 attached to the reduction shaft 11, and a number of bearings 15 fixed to the reduction gear housing 7 and rotatably supporting the drive shaft 10 and the reduction shaft 11. The number of teeth of the reduction gear 13 is greater than the number of teeth of the drive gear 12. The reduction shaft 11 is located rearward of the drive shaft 10.

As is well known, the differential device 5 includes a differential case 16, a number of bearings 17 fixed to the axle housing 1 and rotatably supporting the differential case 16, and a driven gear 18 fixed to the differential case 16 and meshed with the drive gear 14. The differential device 5 also includes a plurality of differential pinion gears 19 rotatably supported within the differential case 16, and left and right side gears 20 rotatably supported within the differential case 16 and meshed with the plurality of differential pinion gears 19. Left and right axle shafts 21 are connected to the left and right side gears 20, respectively. The left and right side gears 20 and the left and right axle shafts 21 are arranged coaxially.

The drive gear 14 and the driven gear 18 are parallel-axis gears (spur gears, helical gears, etc.). This makes them easier to manufacture and improves vibration and noise performance compared to when cross-axis gears (bevel gears, etc.) are used. The drive gear 12 and reduction gear 13 are also parallel-axis gears.

Alternatively, the drive gear 12 and reduction gear 13, and the drive gear 14 and driven gear 18 may be intersecting-axis gears.

The center of the output shaft 9 of the electric motor 3 is called the electric motor center C1. The center of the drive shaft 10 of the reduction gear 2 is called the reduction gear center C2. The center of the axle shaft 21 is called the axle shaft center C3. The electric motor center C1 and the reduction gear center C2 are parallel, particularly coaxial, and the electric motor center C1 and the axle shaft center C3 are parallel.

As shown in Fig. 1, the axle housing 1 of this embodiment is of a banjo type, and integrally has a differential case containing portion 22 that contains the differential case 16, and left and right axle shaft containing portions 23 that contain the left and right axle shafts 21 respectively. A flange 24 for connecting an axle hub (not shown) or the like is integrally provided at the tip of each axle shaft containing portion 23. A spring seat 25 for seating a spring such as a leaf spring is integrally provided at the top of the tip of each axle shaft containing portion 23.

The reduction gear 2 or the reduction gear housing 7 is attached to the front of the differential case containing portion 22. The electric motor 3 or the electric motor housing 8 is attached to the left side of the reduction gear 2 or the reduction gear housing 7. The mounting portions of the reduction gear housing 7 and the electric motor housing 8 are provided with flanges 26, 27, respectively. These flanges 26, 27 are detachably attached to each other by bolts or the like (not shown).

The reduction gear housing 7 is generally formed in a square box shape, and the electric motor housing 8 is generally formed in a cylindrical shape. In the reduction gear housing 7, the left-right width dimension is smaller than the upper-lower height dimension and the front-rear depth dimension, and the height dimension and depth dimension are approximately equal. The electric motor housing 8 is cylindrical and coaxial with the motor center C1, and its right end (one end) in the motor center direction is integrally connected to the flange 27, and its left end (the other end) is closed.

As is well known, the inverter 4 is an electric component for controlling the rotation of the motor 3. In this embodiment, the inverter 4 is attached to the motor 3.

The inverter 4 is generally formed in a two-tiered rectangular box shape, with a left-right width dimension W, an upper-lower height dimension H, and a front-rear depth dimension L. The height dimension H is smaller than the width dimension W and the depth dimension L, and the width dimension W is slightly larger than the depth dimension L. The inverter 4 is shaped like a smaller (in plan view) rectangular parallelepiped upper part 4B combined on top of a larger (in plan view) rectangular parallelepiped lower part 4A. The lower part 4A has the aforementioned width dimension W and depth dimension L. The upper part 4B has a width dimension WB that is approximately equal to the width dimension W of the lower part 4A, and a depth dimension LB that is smaller than the depth dimension L of the lower part 4A, and is disposed along the rear edge of the upper part 4B. The sum of the height dimension of the lower part 4A and the height dimension of the upper part 4B is H. A plurality of (two) heat dissipation members 28 protrude from the right end of the front surface of the upper part 4B.

In this embodiment, the inverter 4 is attached on the motor housing 8. The motor housing 8 is provided with bosses 29 that stand upward, and the inverter 4 is attached on the boss 29. In particular, a flange 30 that protrudes to the side is provided on the bottom surface portion 33 of the inverter 4, and the flange 30 is attached to the boss 29.

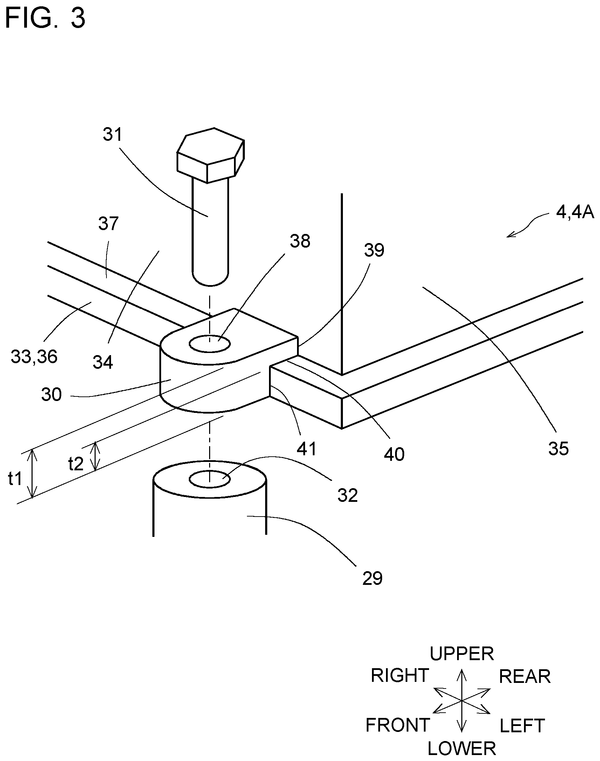

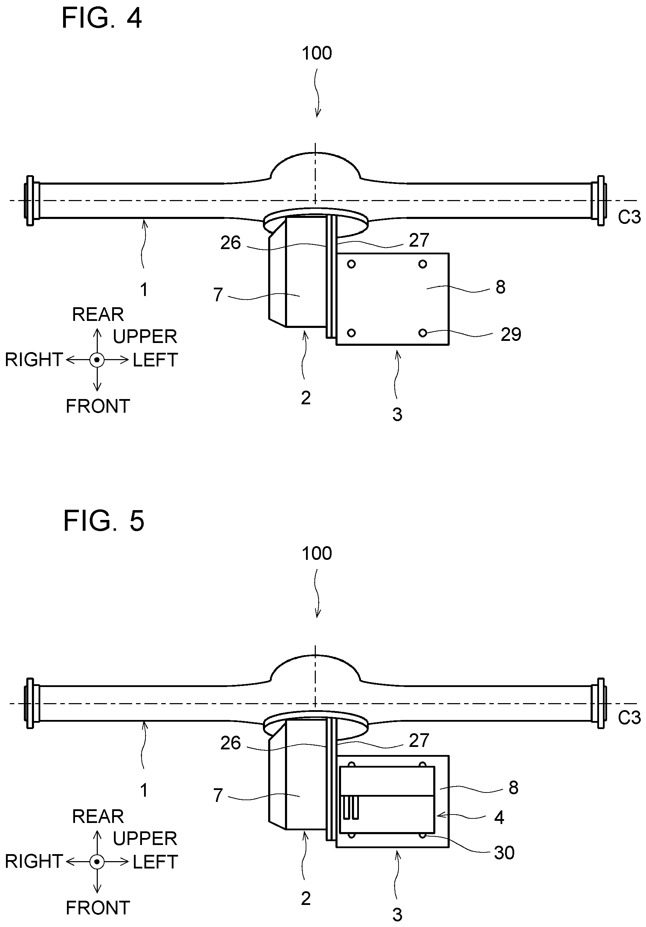

As also shown in Figs. 3 and 4, the boss 29 is a cylindrical boss that stands upward from the motor housing 8, and a boss hole 32 that is a female screw hole into which a bolt 31 is screwed is provided on the upper end surface of the boss 29. The bosses 29 are provided to the motor housing 8 by welding or integral molding, but may be provided by other methods. The inverter 4 is generally attached to the four corners of a rectangle in a plan view, so corresponding to this, a total of four bosses 29 are provided. The position and length of the bosses 29 are set so that when the inverter 4 is attached to the bosses 29, the inverter 4 is spaced upward from the motor housing 8, the inverter 4 does not interfere with the motor housing 8, and the inverter 4 floats above the motor housing 8.

A bottom surface portion 33 is formed at the lower part 4A of the inverter 4. This bottom surface portion 33 is formed in a rectangular shape with a width dimension longer than a depth dimension in a plan view. Front and rear side portions 34 (only the front side is shown in Fig. 3) and left and right side portions 35 (only the left side is shown in Fig. 3) rise vertically from the bottom surface portion 33. The depth between the front and rear side portions 34 is slightly smaller than the depth of the bottom surface portion 33, and the width between the left and right side portions 35 is also slightly smaller than the width of the bottom surface portion 33. Therefore, the bottom surface portion 33 protrudes horizontally outward from the front and rear side portions 34 and the left and right side portions 35. Here, outward refers to the direction away from the geometric center of the bottom surface portion 33 in a plan view. The bottom surface portion 33 has bottom end faces 36 on the front, rear, left and right sides that are positioned at the outermost side, and a bottom upper face 37 that extends between the end faces 36 and the side portions 34, 35.

As shown in Fig. 5, the flanges 30 are provided at the four corners of the bottom surface portion 33 in a plan view. More specifically, the flanges 30 are integrally provided at the left and right ends of the front and rear edges of the bottom surface portion 33 by welding, casting or other methods. The flanges 30 may be provided by other methods such as screw fastening. A total of four flanges 30 are arranged symmetrically front to rear and left to right. Therefore, only the front left flange 30 shown in Fig. 3 will be described in detail here.

The flange 30 is formed in a U-shape with a rounded tip in a plan view, and has a flange hole 38 as a through hole through which the bolt 31 is inserted. The thickness t1 of the flange 30 in the height direction is made thicker than the thickness t2 of the bottom surface portion 33. The base end of the flange 30 is formed in a stepped shape to match the stepped shape formed by the side portion 34 on the front side, the upper surface 37 of the bottom surface portion, and the end face 36 of the bottom surface portion in the inverter 4. That is, the base end of the flange 30 is formed with an upper end surface 39, an intermediate stepped surface 40, and a lower end surface 41 that form a stepped shape. The upper end surface 39 is fixed or integrally fixed to the side portion 34, the intermediate stepped surface 40 is fixed or integrally fixed to the upper surface 37 of the bottom surface portion, and the lower end surface 41 is fixed or integrally fixed to the end face 36 of the bottom surface portion. With this configuration, the flange 30 can be firmly fixed or integrally fixed to the bottom surface portion 33.

The bottom surface of the flange 30 is flush with the bottom surface of the bottom surface portion 33 of the inverter 4. The radius of curvature of the tip of the flange 30 in a plan view is equal to or slightly smaller than the radius of the boss 29.

As shown in Figs. 1 and 3, when mounting the inverter 4 to the motor 3 or the motor housing 8, the flanges 30 at the four corners of the inverter 4 are placed and seated on the four bosses 29, and the flange holes 38 are aligned with the boss holes 32 so that they are coaxial. Then, for each set of flanges 30 and bosses 29, the bolts 31 are inserted from above into the flange holes 38 and tightened into the boss holes 32. This completes mounting of the inverter 4, and the inverter 4 is mounted to the motor housing 8 in a state where it is spaced (floating) slightly above the motor housing 8. This prevents the inverter 4 from receiving direct vibration from the motor 3 or the motor housing 8, and improves the durability of the inverter 4.

Fig. 4 shows the electric axle device 100 (axle housing 1, reduction gear 2, and electric motor 3) before the inverter 4 is mounted. In contrast, Fig. 5 shows the electric axle device 100 after the inverter 4 is mounted. As shown in Fig. 5, the inverter 4 is attached in a state where the inverter 4 is slightly apart from the flange 27 of the motor housing 8 to the left. This prevents interference between the inverter 4 and the flange 27, and prevents the inverter 4 from receiving direct vibration from the flange 27, improving the durability of the inverter 4.

In this embodiment, the inverter 4 and the motor 3 are electrically connected by a cable (not shown) located outside of them. However, since the inverter 4 is attached to the motor 3 and the distance between them is short, the cable is very easy to route and connect. This greatly improves the ease of assembly.

In addition, when the axle housing 1 and the motor 3 rise and fall during vehicle travel, the inverter 4 also follows the motor 3 and rises and falls together. Therefore, no relative movement occurs between the inverter 4 and the motor 3, and deformation of the cable during the rise and fall can be prevented. This prevents the cable from being damaged or broken due to the relative movement between the two. In addition, no unnecessary load is placed on the connector connecting the cable to the inverter 4 and the motor 3, and damage to the connector connection can be prevented. In this way, reliability can be improved significantly.

When the vehicle is traveling, the axle housing 1 may twist (wind up) around the axle shaft center C3, and this twisting may cause the electric motor 3 to vibrate around the axle shaft center C3. Even in this case, since the inverter 4 is attached to the electric motor 3, there is no relative movement between them, and damage to the cable and connector connection can be prevented.

In this embodiment, the inverter 4 is supported at multiple points (four points) from below on the electric motor housing 8, so that the inverter 4 can be stably supported.

Next, modified examples of the present disclosure will be described. Note that parts similar to those in the basic embodiment as above are given the same reference numerals in the drawings and will not be described again. Below, differences from the basic embodiment will be mainly described.

### [First modified example]

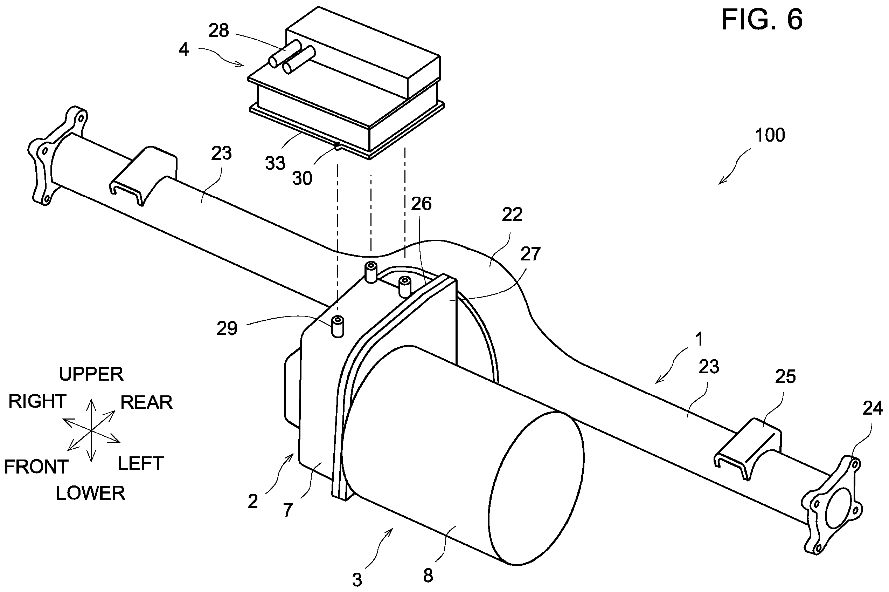

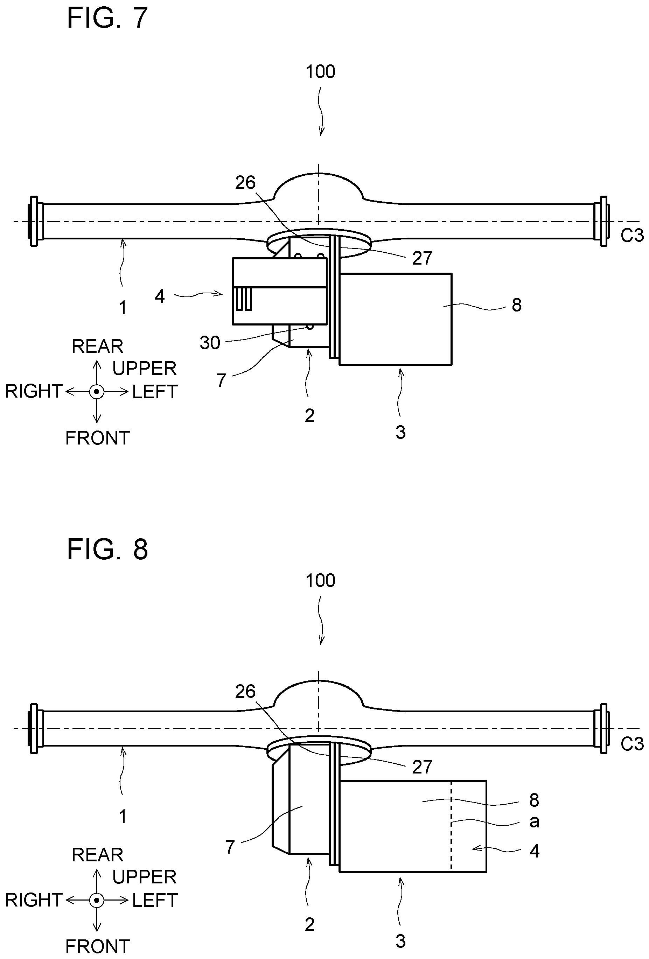

Figs. 6 and 7 show the first modified example. As shown in the figures, in this modified example, the inverter 4 is attached to the reduction gear 2.

More specifically, the inverter 4 is mounted on the reduction gear housing 7. The reduction gear housing 7 is provided with a boss 29 that stands upward, and the inverter 4 is mounted on the boss 29. In particular, a flange 30 provided on the bottom surface portion 33 of the inverter 4 is mounted on the boss 29.

The flanges 30 are provided at a total of three places, one at the front edge and two at the rear edge of the bottom surface portion 33. Correspondingly, a total of three bosses 29 are provided on the reduction gear housing 7. The three bosses 29 are provided upright on the top surface of the reduction gear housing 7, which is a nearly horizontal flat surface. As can be seen from Fig. 7, the three flanges 30 are arranged biased to the left side of the bottom surface portion 33. This is because the left-right width of the top surface of the reduction gear housing 7 is shorter than the left-right width of the motor housing 8. As described above, the inverter 4 is mounted in a state separated (floating) upward from the reduction gear housing 7. The inverter 4 is also attached in a state where the inverter 4 is slightly apart from the flange 26 of the reduction gear housing 7 to the right. This prevents the inverter 4 from receiving direct vibration from the flange 26, improving the durability of the inverter 4.

The advantages of this modified example are the same as those of the basic embodiment. That is, even when the inverter 4 is attached to the reduction gear housing 7, the distance from the electric motor 3 is much shorter than when it is attached to the vehicle body. This makes it very easy to route and connect the cables, and significantly improves assembly.

In addition, the axle housing 1, reduction gear 2, electric motor 3, and inverter 4 move up and down as a unit when the vehicle is traveling. Therefore, no relative movement occurs between the inverter 4 and the electric motor 3, and deformation of the cables during movement up and down can be prevented. This prevents the cables from being damaged or broken due to the relative movement between the two. In addition, unnecessary loads are not placed on the connectors that connect the cables to the inverter 4 and the electric motor 3, and damage to the connector connections can also be prevented. In this way, reliability can be significantly improved.

When the axle housing 1 is twisted while the vehicle is running, the reduction gear 2, the electric motor 3, and the inverter 4 vibrate together around the axle shaft center C3. Therefore, no relative movement occurs between the inverter 4 and the electric motor 3, and damage to the cable and connector connection can be prevented.

### [Second modified example]

Fig. 8 shows the second modified example. As shown in the figure, in this modified example, the inverter 4 is attached to the electric motor 3.

In particular, in this modified example, the inverter 4 is attached inside the electric motor housing 8, and the housing of the inverter 4 is shared with the electric motor housing 8. The dashed line a indicates the boundary between the electric motor 3 and the inverter 4.

The electric motor housing 8 is extended axially to the left from that of the basic embodiment shown in Fig. 4, and the electric circuit part of the inverter 4 is containd in the extended part. The dashed line a indicates the left end position of the electric motor housing 8 in the basic embodiment before extension, and the part to the left of the dashed line a is the extended part. The electric circuit of the inverter 4 is electrically connected to the electric circuit of the electric motor 3 inside the electric motor housing 8.

In this modified example, the inverter 4 and the electric motor 3 are already electrically connected inside the electric motor housing 8. Therefore, an external cable connecting the inverter 4 and the electric motor 3 and the connection work thereto are not required, the configuration can be simplified, and the ease of assembly can be significantly improved.

In addition, since the inverter 4 is substantially stored inside the electric motor 3, even if the axle housing 1 and the electric motor 3 rise and fall while the vehicle is traveling, the inverter 4 and the electric motor 3 do not move relative to each other, and deformation of the cable connecting the two can be prevented. In addition, the connector connecting the cable to the inverter 4 and the electric motor 3 can be omitted, and the cable can be connected directly, so there is no need to consider damage to the connector connection part. In this way, reliability can be significantly improved.

The same applies when the axle housing 1 is twisted while the vehicle is traveling.

As a modified example of the second modified example, the inverter 4 can be mounted inside the reduction gear housing 7, and the housing of the inverter 4 can be shared with the reduction gear housing 7.

### [Third modified example]

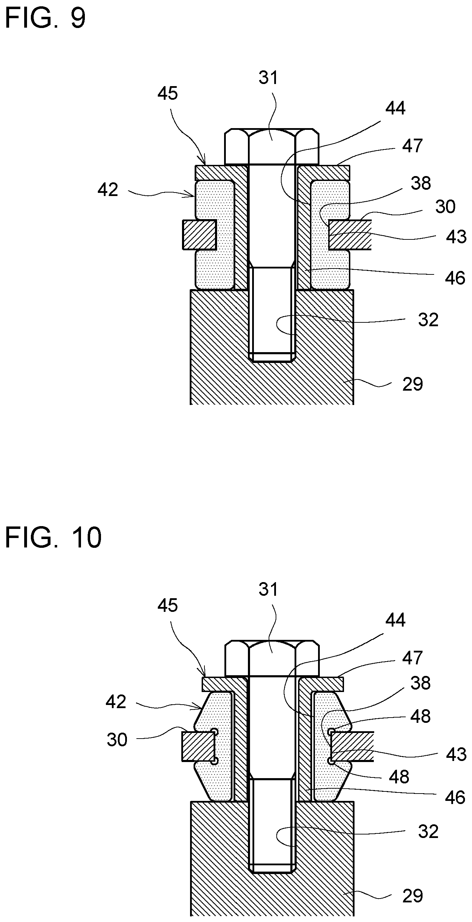

Fig. 9 shows the third modified example. In this third modified example, the inverter 4 is supported in a vibration-proof manner, and the flange 30 and the boss 29 are attached via an elastic body 42. This third modified example can be applied to both the basic embodiment and the first modified example, but here we will describe an example in which it is applied to the basic embodiment.

The elastic body 42 is formed of an elastic material such as solid or hollow rubber, and is specifically formed by a rubber bushing. The elastic body 42 is basically formed into a cylindrical shape with a constant outer diameter extending in the height direction, and has a reduced-diameter groove portion 43 on the outer periphery of the middle part in the height direction, which is fitted into the flange hole 38 of the flange 30. The upper and lower surfaces of the groove portion 43 sandwich and support the upper and lower surfaces of the flange 30. The groove 43 has a general parallel groove shape.

A metal (e.g., iron) or resin bush 45 is fitted into the central hole 44 of the elastic body 42. The bush 45 integrally has a circular tube 46 that is fitted into the central hole 44 from above, and a circular flange 47 provided at the upper end of the circular tube 46. When mounting, the bolt 31 is inserted into the circular tube 46 from above, and after tightening into the boss hole 32, it is closely contacted to the circular flange 47. This support method is applied to all mounting parts of the flange 30 and the boss 29.

According to this modified example, the flange 30 is not directly attached to the boss 29, but is attached via the elastic body 42. Therefore, the vibration of the electric motor 3 can be largely absorbed by the elastic body 42 before being transmitted to the inverter 4, and the vibration transmitted to the inverter 4 can be largely suppressed. This can greatly improve reliability.

When the bolt 31 is tightened to the boss 29 with the bush 45 in between, the amount of tightening of the bolt 31 is controlled by the bush 45. This prevents excessive compression and crushing of the elastic body 42. This allows the elastic body 42 to fully exert its functions without impairing them.

Other advantages are the same as in the basic embodiment. The advantages of applying this modified example to the first modified example are also clear.

Fig. 10 shows a modified example of the third modified example. In this modified example, the shape of the elastic body 42, i.e., the rubber bushing, is different, and relief grooves 48 are provided at the upper and lower corners of the bottom surface of the groove portion 43. This structure is the same as that described in Patent Document 2. These relief grooves 48 prevent the upper and lower corners of the inner circumferential surface of the flange hole 38 from contacting the elastic body 42, thereby preventing damage to the elastic body 42.

The outer shape of the elastic body 42 is also different, and the portions above (one end side in axial direction) and below (the other end side in axial direction) the groove portion 43 are tapered so that the diameter decreases as they go upward and downward.

Although the embodiments of the present disclosure have been described above in detail, various other embodiments and modified examples of the present disclosure are also conceivable.

For example, the inverter may be attached to both the reduction gear and the electric motor. That is, the inverter may be attached across both the reduction gear and the electric motor. In this case, as in the basic embodiment and the first modified example, the inverter can be attached on the housings of both the reduction gear and the electric motor. Then, bosses that stand upward can be provided on both the reduction gear and the electric motor, and the inverter can be attached to these bosses. Then, flanges corresponding to the bosses can be provided on the bottom surface of the inverter, and each flange can be attached to each boss.

As a modified example of the second modified example, the inverter may be attached inside the housings of both the reduction gear and the electric motor, and the housing of the inverter may be shared with the housings of both the reduction gear and the electric motor.

The number, position, configuration, etc. of the mounting part and locations of the inverter are arbitrary. The inverter can be attached at one location, but from the viewpoint of support rigidity, it is preferable to attach it at multiple locations as in the above embodiment. In addition, it is preferable that the inverter is attached at attachment points that are as evenly distributed as possible. This is because the support load per point can be reduced.

In the basic embodiment and the first modified example, the inverter is attached horizontally, but the inverter can also be attached vertically or diagonally.

The shape, dimensions, structure, etc. of the inverter are arbitrary. The number, positions, shapes, structures, etc. of the flanges and bosses are also arbitrary. For example, the basic shape of the bosses can be a rectangular column, etc.

The flange and boss can be omitted, and the inverter can be directly attached to the housing of at least one of the reduction gear and the motor. In this case, it is also preferable to attach the inverter via an elastic body.

The configurations of the above-mentioned embodiments and modified examples can be combined in part or in whole, unless there is a particular contradiction. The embodiments of the present disclosure are not limited to the above-mentioned embodiments, and all modified examples, applications, and equivalents that are included in the idea of the present disclosure defined by the claims are included in the present disclosure. Therefore, the present disclosure should not be interpreted as being limited, and can be applied to any other technology that falls within the scope of the concept of the present disclosure.

## Claims

1. An electric axle device for a vehicle, comprising:
an axle housing for containing a differential device;
a reduction gear attached to the axle housing;
an electric motor attached to the reduction gear; and
an inverter attached to at least one of the reduction gear and the electric motor.

2. The electric axle device for the vehicle according to claim 1, wherein the inverter is attached on the housing of at least one of the reduction gear and the electric motor.

3. The electric axle device for the vehicle according to claim 1, wherein a boss that stands upward is provided on the housing of at least one of the reduction gear and the electric motor, and the inverter is attached to the boss.

4. The electric axle device for the vehicle according to claim 3, wherein a flange that protrudes to a side is provided on a bottom surface portion of the inverter, and the flange is attached to the boss.

5. The electric axle device for the vehicle according to claim 4, wherein the flange and the boss are attached via an elastic body.

6. The electric axle device for the vehicle according to claim 1, wherein the inverter is attached inside of the housing of at least one of the reduction gear and the electric motor, and a housing of the inverter is shared with the housing of at least one of the reduction gear and the electric motor.
